Europäisches Patentamt

European Patent Office

Office européen des brevets

(11) Numéro de publication: **0 128 071**
**A1**

# (12) DEMANDE DE BREVET EUROPEEN

(21) Numéro de dépôt: **84400980.3**

(22) Date de dépôt: **15.05.84**

(51) Int. Cl.³: **B 01 D 3/06**
**C 10 G 7/04, B 01 D 1/02**

(30) Priorité: **20.05.83 FR 8308455**

(43) Date de publication de la demande:
**12.12.84 Bulletin 84/50**

(84) Etats contractants désignés:
**BE DE GB IT NL**

(71) Demandeur: **COMPAGNIE FRANCAISE DE RAFFINAGE**
Société anonyme dite:
**5, rue Michel-Ange**
**F-75781 Paris Cedex 16(FR)**

(72) Inventeur: **Mouton, Marcel**
**2 Avenue Nicolas II**
**F-76600 Le Havre(FR)**

(72) Inventeur: **Goupil, Jean**
**55 rue d'Emeraude**
**F-76610 Le Havre(FR)**

(74) Mandataire: **Jolly, Jean-Pierre et al,**
**Cabinet BROT 83, rue d'Amsterdam**
**F-75008 Paris(FR)**

(54) Appareil de déshydratation composé d'un évaporateur à double corps et système de déshydratation comprenant cet appareil.

(57) L'invention concerne un appareil de déshydratation, capable de séparer la fraction aqueuse et la fraction hydrocarbure d'un mélange de ces deux fractions, par chauffage et vaporisation dans une chambre dite de détente.

Selon l'invention, cet appareil comprend au moins deux chambres de détentes (1, 2) placés en série, les parties supérieures de ces deux chambres communiquant par un conduit de raccordement (5), de façon à permettre l'évacuation de l'appareil par une même canalisation (7), d'une phase vapeur contenant pratiquement toute la fraction aqueuse dudit mélange.

EP 0 128 071 A1

./...

FIG.1

<u>Appareil de déshydratation composé d'un évaporateur à double corps et système de déshydratation comprenant cet appareil.</u>

L'invention concerne un appareil de déshydratation –ou déshydrateur– capable de séparer la fraction aqueuse et la fraction hydrocarbure d'un mélange de ces deux fractions, par chauffage et vaporisation dans une chambre dite de détente.

L'invention a trait notamment aux appareils d'analyse faisant appel à un traitement préalable de fractionnement du produit à analyser, de façon à éviter toute détérioration ultérieure ou erreur d'interprétation des résultats, dans les appareils d'analyse proprement dits.

L'analyse physico-chimique de divers produits, et notamment de charges d'hydrocarbures, s'effectue généralement par une suite complexe d'étapes comprenant une étape de distillation par passage au travers d'une colonne de distillation, de façon à séparer dans la mesure du possible différentes coupes ou fractions du produit à analyser.

Dans de nombreux cas, et notamment dans le cas d'une charge d'hydrocarbures, on est en présence d'un mélange complexe, comprenant à l'origine tant des gaz que des liquides plus ou moins miscibles, et notamment une fraction relativement importante d'eau qui induit un certain nombre d'inconvénients. La présence d'eau dans un mélange à distiller a notamment les conséquences suivantes :

- en quantité relativement importante, cette eau passe à l'état de vapeur d'une façon brusque, et peut provoquer ainsi la rupture totale ou des fêlures internes importantes de la colonne de distillation ;

- tous les mélanges eau-hydrocarbures peuvent être considérés comme totalement immiscibles, et l'étude analytique de tels mélanges est relativement complexe. En particulier, il peut se former des azéotropes, à savoir un mélange qui se comporte à la vaporisation comme un corps pur, tel que le mélange eau-benzène. Or, tout azéotrope constitue une limite infranchissable en distillation simple et seule la distillation azéotropique ou extractive avec addition d'un tiers corps permet de pallier cet inconvénient.

L'invention vise donc à éviter la présence d'eau dans les mélanges à distiller, par passage de ces mélanges au travers d'un déshydrateur, apte à séparer totalement la fraction aqueuse de la fraction hydrocarbure d'un mélange.

Dans la technique antérieure, on a déjà proposé dans ce but des appareils de déshydratation composés généralement d'une simple chambre de détente, dans laquelle est vaporisée, sous l'effet de divers moyens de chauffage, une fraction plus ou moins importante du produit à déshydrater.

Les appareils de ce type présentent cependant de nombreux inconvénients, notamment du fait que la déshydratation n'est pas complète et que la récupération de la fraction partiellement déshydratée n'est pas assez performante, alors qu'une partie des vapeurs dégagées est cependant entraînée avec ladite fraction.

L'invention a pour but de pallier les inconvénients susmentionnés, en proposant un appareil plus perfectionné.

A cet effet, la présente invention a pour objet un appareil de déshydratation remarquable notamment en ce qu'il comprend au moins deux chambres de détente placées en série, les parties supérieures de ces deux chambres communiquant par un conduit de raccordement, de façon à permettre l'évacuation de l'appareil, par une même canalisation, d'une phase vapeur contenant pratiquement toute la fraction aqueuse dudit mélange.

De cette manière, la présence de plusieurs chambres en série, dans le trajet du produit à déshydrater, permet d'assurer de façon plus complète cette déshydratation.

Selon une caractéristique avantageuse de l'invention, l'appareil de déshydratation comprend une double paroi, à l'intérieur de laquelle circule un fluide caloporteur tel qu'une huile, éventuellement de synthèse, pouvant être porté à une température supérieure à 100°C. On citera par exemple les fluides caloporteurs commercialisés par la firme HUELS France et constitués de mélanges d'isomères de dibenzyltoluènes (ou benzyltoluènes).

De préférence, le mélange (ou produit) à déshydrater est introduit dans les chambres de détente par une canalisation d'alimentation enroulée de façon hélicoïdale autour desdites chambres. Ainsi, le trajet relativement long qu'emprunte le produit à déshydrater permet d'assurer un meilleur contact thermique avec le fluide caloporteur.

L'introduction du mélange dans la première chambre de détente s'effectue avantageusement en sa partie inférieure, de manière à ménager un espace suffisant dans la chambre pour permettre une bonne détente des vapeurs.

Par contre, l'introduction dans la deuxième chambre du mélange partiellement déshydraté dans la première chambre s'effectue à la partie supérieure de la deuxième chambre, alors que la récupération de la fraction hydrocarbure s'effectue par un siphon coudé. Ainsi, les vapeurs qui sont dégagées lors de ce deuxième traitement ne ressortent pas, avec la fraction déshydratée, par le siphon, mais s'accumulent dans la partie supérieure de cette deuxième chambre, et sont évacuées, par le conduit de raccordement, vers la partie supérieure de la première chambre.

Enfin, la base de la deuxième chambre de détente pourra être légèrement inclinée et munie en son fond d'un robinet de vidange. Il est ainsi possible de vidanger complètement l'appareil de déshydratation et d'éviter tout mélange entre produits à analyser différents.

Un tel appareil de déshydratation conforme à l'invention présente notamment une efficacité accrue par rapport aux appareils selon l'art antérieur.

La description qui va suivre, faite en regard des dessins annexés, donnés à titre non limitatif,permettra de mieux comprendre l'invention et d'en apprécier la portée.

La figure 1 est une vue en coupe d'une forme de réalisation de l'appareil de déshydratation selon la présente invention ;

La figure 2 est un schéma fonctionnel des différentes parties d'un système de déshydratation selon l'invention.

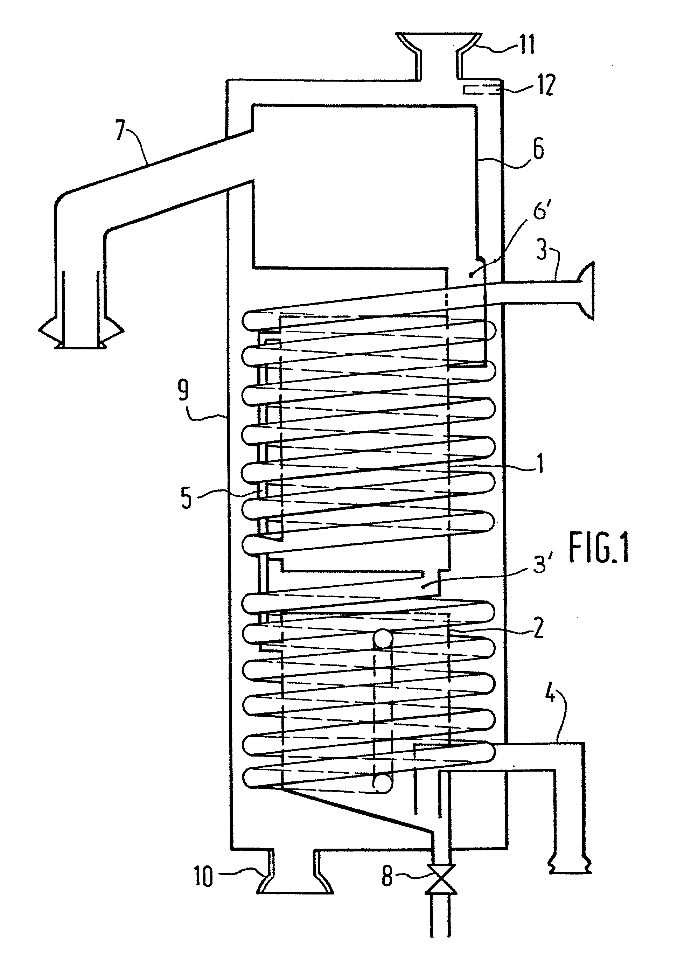

L'appareil de déshydratation conforme à la présente invention, représenté en coupe sur la figure 1, comprend deux chambres de détente, 1 et 2, placées en série dans le trajet du produit à déshydrater. Une canalisation d'alimentation 3 conduit le produit à déshydrater préalablement à une analyse jusqu'à la partie inférieure de la première chambre de détente 1, et une seconde canalisation 3' récupère le produit partiellement déshydraté du fond de ladite première chambre de détente et le conduit jusqu'à la partie supérieure de la deuxième chambre de détente 2. La récupération du produit totalement déshydraté s'effectue dans la deuxième chambre de détente, au moyen d'un siphon coudé 4. Un conduit de raccordement 5 met en communication les parties supérieures des chambres de détente 1,2, alors qu'un réservoir 6 muni d'un tuyau d'évacuation des gaz 7 permet de collecter, par un tuyau 6' communiquant avec la partie supérieure de la chambre 1, les vapeurs produites dans l'appareil, afin de les évacuer. Enfin, un robinet de vidange 8 est également prévu au fond de la deuxième chambre de détente 2, la base de celle-ci étant légèrement inclinée en direction de ce robinet.

Le chauffage de l'appareil est assuré par un fluide caloporteur tel qu'une huile, éventuellement de synthèse, capable d'être portée à des températures voisines de 250°C, qui circule à l'intérieur de la double paroi formée par les parties externes des chambres de détente 1,2 et une enceinte extérieure 9. Des orifices d'entrée 10 et de sortie 11 sont prévus de façon à brancher des tuyaux de raccordement sur un système de circulation et de chauffage du fluide caloporteur. Un capteur de température, tel qu'une sonde de platine, peut être disposé dans un puits thermométrique 12,ménagé près de la sortie du fluide caloporteur 11.

La circulation du fluide caloporteur s'effectue dans l'appareil, entre la double paroi, de bas en haut, de telle sorte que ce ne soit pas un régime d'écoulement mais de refoulement du fluide qui s'instaure, et qu'en outre le fluide plus chaud arrive immédiatement en contact avec la deuxième chambre de détente ; dans une variante de réalisation, on pourra prévoir plusieurs circulations de fluides caloporteurs, de telle sorte que la deuxième chambre soit portée à une température supérieure à celle de la première chambre.

Le fonctionnement des différentes parties de l'appareil de déshydratation va maintenant être expliqué.

Le produit à déshydrater -typiquement un mélange eau-hydrocarbures- est conduit successivement dans les deux chambres de détente 1,2, de façon à assurer quasi-totalement la déshydratation du produit. Les canalisations 3 et 3' d'alimentation des chambres 1 et 2 sont enroulées de façon hélicoïdale, à la manière d'un serpentin, autour des chambres respectives. De cette manière, un meilleur contact thermique avec le fluide caloporteur est assuré et le produit à déshydrater est porté à la température voulue, généralement proche, quoique légèrement supérieure à 100°C.

L'alimentation de la première chambre 1 s'effectue en sa partie inférieure de façon à assurer un espace suffisant pour une bonne détente des vapeurs, alors que l'alimentation de la deuxième chambre 2 s'effectue en sa partie supérieure. La récupération de la fraction déshydratée s'effectue par le siphon coudé 4, de façon à éviter que des vapeurs (et donc de l'eau) puissent ressortir avec ladite fraction déshydratée.

Le conduit 5 réunissant les parties supérieures des deux chambres 1 et 2 permet de collecter les vapeurs produites par l'appareil et de les évacuer par un même tuyau 7, par l'intermédiaire du conduit 6' et du réservoir 6.

Enfin, la base de la deuxième chambre de détente 2, légèrement inclinée en direction du robinet de vidange 8, assure l'évacuation totale du produit à analyser et évite tout mélange avec d'autres produits introduits ultérieurement.

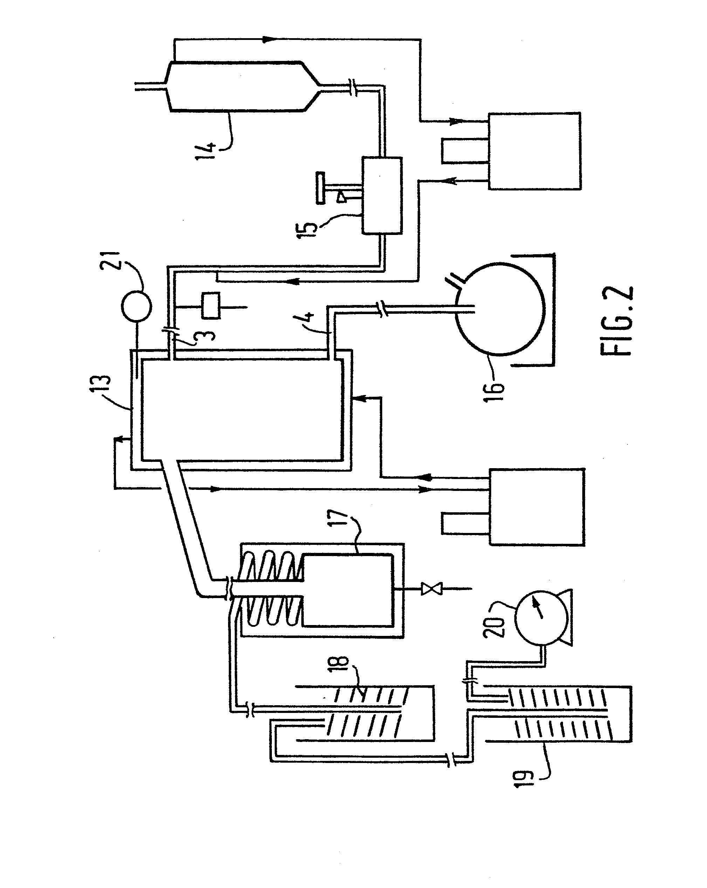

La figure 2 représente un système de déshydratation complet, qui comprend, outre l'appareil de déshydratation tel que décrit à la figure précédente et référencé 13 dans la présente figure, un appareil de chargement sous la forme d'un bac de réservoir 14 et d'une pompe doseuse 15 apte à introduire dans l'appareil 13, par la canalisation d'alimentation 3, le produit à analyser. Ce système comprend également un réservoir de récupération 16 du produit déshydraté, connecté au siphon 4, et divers pièges 17, 18 et 19, en série, destinés à récupérer respectivement l'eau et les hydrocarbures liquides. Le piège 17, alimenté par le conduit 7 et dont le véhicule de réfrigération est l'eau froide courante, agit à la température ambiante. Le reste de l'eau et les hydrocarbures liquides à 0°C sont récupérés par le piège 18, dont le véhicule de réfrigération est la glace. Enfin, les hydrocarbures condensables à -80°C sont récupérés dans le piège 19, dont le véhicule de réfrigération est un mélange acétone-anhydride carbonique. Un compteur à gaz 20 disposé en aval du piège 19, permet de mesurer le volume des vapeurs d'hydrocarbures non condensables à -80°C, dans le cas où un bilan complet du fractionnement est désiré.

Si l'on veut reconstituer la fraction hydrocarbure, il suffit alors de rassembler les produits contenus dans le réservoir de récupération 16 et les pièges 17 et 18. Les gaz condensés récupérés dans le piège 19 ne sont pas repris dans la fraction hydrocarbure, si ladite fraction doit être soumise à une opération ultérieure de distillation fractionnée, comprenant une étape préalable de "débutanisation".

Ce système de déshydratation comprend aussi des moyens de chauffage, sous la forme de thermostats TH1 et TH2 et de fluides caloporteurs, tels qu'une huile de synthèse apte à être portée à une température de l'ordre de 250°C. Ces moyens de chauffage permettent le préchauffage du bac-réservoir 14 et le chauffage du déshydrateur 13. Un contrôle de la température peut être assuré, par exemple au moyen d'une sonde au platine 21, disposée dans le puits thermométrique 12 près de la sortie du fluide caloporteur 11.

Ce système de déshydratation est conçu pour déshydrater notamment des pétroles bruts, ou des coupes d'hydrocarbures ayant été en contact avec de l'eau, et également, quoique non exclusivement, des produits chimiques divers sous forme liquide, tels que des produits ex-gazéification (du charbon) ou des produits ex-biomasse, ces produits pouvant contenir des teneurs en eau variables comprises entre 0 et 25 %. Des produits contenant plus de 25 % d'eau peuvent également être traités, cette limite n'étant retenue qu'à titre indicatif, mais il est bien évident pour l'homme de l'art que, si une charge d'hydrocarbures contient une fraction

d'eau plus importante, une simple décantation permettra généralement de ramener sa teneur à une valeur inférieure à cette limite.

9  0128071

REVENDICATIONS

1.- Appareil de déshydratation, capable de séparer la fraction aqueuse et la fraction hydrocarbure d'un mélange de ces deux fractions, par chauffage et vaporisation dans une chambre dite de détente, caractérisé en ce qu'il comprend au moins deux chambres de détente (1,2) placées en série, les parties supérieures de ces deux chambres communiquant par un conduit de raccordement (5), de façon à permettre l'évacuation de l'appareil par une même canalisation (7), d'une phase vapeur contenant pratiquement toute la fraction aqueuse dudit mélange.

2.- Appareil de déshydratation selon la revendication 1, caractérisé en ce qu'il comprend une double paroi, à l'intérieur de laquelle circule un fluide caloporteur porté à une température supérieure à 100°C.

3.- Appareil de déshydratation selon la revendication 2, caractérisé en ce qu'il comprend des canalisations (3,3') d'alimentation en mélange à traiter des chambres de détente (1,2), ces canalisations étant enroulées de façon hélicoïdale autour desdites chambres, de façon à assurer un meilleur contact thermique avec le fluide caloporteur.

4.- Appareil de déshydratation selon l'une des revendications 1 à 3, caractérisé en ce que la canalisation (3) d'alimentation en mélange à traiter de la première chambre de détente (1) débouche à la partie inférieure de cette chambre, de façon à assurer un espace suffisant pour une bonne détente des vapeurs.

5.- Appareil de déshydratation selon l'une des revendications 1 à 4, caractérisé en ce que la canalisation d'alimentation de la deuxième chambre de détente (2) en mélange partiellement déshydraté dans la première chambre de détente débouche à la partie supérieure de ladite deuxième chambre (2) et en ce qu'un siphon coudé (4),

débouchant à la partie inférieure de la seconde chambre (2), permet de récupérer la fraction hydrocarbure déshydratée, en évitant que des vapeurs puissent ressortir avec ladite fraction déshydratée.

6.- Appareil de déshydratation selon l'une des revendications 1 à 5, caractérisé en ce que la base de la deuxième chambre de détente est légèrement inclinée et est munie en son fond d'un robinet de vidange (5), de façon à pouvoir vidanger complètement ledit appareil.

7.- Système de déshydratation comprenant un appareil de déshydratation selon l'une des revendications 1 à 6, caractérisé en ce qu'il comprend en outre des moyens de chargement, sous la forme d'un bac de charge (14) muni d'une pompe doseuse (15), des moyens de chauffage (TH1, TH2) et de contrôle (21) de la température, et des appareils de récupération (16,17,18,19,20) des diverses fractions du mélange traité.

8.- Système de déshydratation selon la revendication 7, caractérisé en ce que les appareils de récupération des diverses fractions du mélange à déshydrater comprennent un réservoir de récupération (16) du produit déshydraté, divers pièges (17,18 et 19) en série, à températures de réfrigération de plus en plus basses, fonction des produits à condenser, et un compteur à gaz (20) pour déterminer le volume de la fraction non condensée.

9.- Système d'analyse, caractérisé en ce qu'il comprend un système de déshydratation selon l'une des revendications 7 ou 8 et des moyens d'analyse des produits ainsi déshydratés, disposés en aval du système de déshydratation.

FIG.1

FIG.2

Office européen
des brevets

**RAPPORT DE RECHERCHE EUROPEENNE**

EP 84 40 0980

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl. ³) |
|---|---|---|---|
| A | US-A-3 377 273 (E. GLÜCKAUF) <br> * Colonne 4, lignes 7-61; figure 2 * | 1,3,4 | B 01 D 3/06 <br> C 10 G 7/04 <br> B 01 D 1/02 |
| A | US-A-3 207 677 (J.W. COLTON) <br> * Colonne 2, exemple 1; figures * | 1 | |
| A | GB-A- 636 324 (S.G. DEHN) <br> * Page 3, lignes 72-123; figure 1 * | 3 | |
| A | US-A-3 105 021 (M. RANDALL) <br> * Colonne 2, figure 1 * | 3,7 | |
| A | US-A-3 585 124 (H.L. MYERS) | | |

DOMAINES TECHNIQUES
RECHERCHES (Int. Cl. ³)

B 01 D
C 10 G
G 01 N

Le présent rapport de recherche a été établi pour toutes les revendications

| Lieu de la recherche <br> LA HAYE | Date d'achèvement de la recherche <br> 23-08-1984 | Examinateur <br> VAN BELLEGHEM W.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de depôt ou après cette date
D : cité dans la demande
L : cité pour d'autres raisons

& : membre de la même famille, document correspondant

OEB Form 1503 03 82